# EUROPÄISCHE PATENTSCHRIFT

(11) **EP 2 537 072 B1**
(45) Veröffentlichungstag und Bekanntmachung des Hinweises auf die Patenterteilung: **20.11.2013**
(21) Anmeldenummer: 10704763.1
(22) Anmeldetag: 17.02.2010
(51) Int. Cl.: G05B 13/02

(54) **VORRICHTUNG ZUR TABAKAUFBEREITUNG IN DER TABAK VERARBEITENDEN INDUSTRIE, UND VERFAHREN ZUM BETRIEB EINER VORRICHTUNG**
APPARATUS FOR PREPARING TOBACCO IN THE TOBACCO-PROCESSING INDUSTRY, AND METHOD FOR OPERATING AN APPARATUS
DISPOSITIF DE PRÉPARATION DU TABAC DANS L'INDUSTRIE DE TRANSFORMATION DU TABAC, AINSI QUE PROCÉDÉ DE FONCTIONNEMENT D'UN DISPOSITIF

(43) Veröffentlichungstag der Anmeldung: 26.12.2012
(73) Patentinhaber: Hauni Maschinenbau AG, 21033 Hamburg (DE)
(72) Erfinder: ULLNER, Tim, 21039 Hamburg (DE); FUNKE, Peter, 22175 Hamburg (DE)
(74) Vertreter: Müller Verweyen
(86) Internationale Anmeldenummer: PCT/EP2010/000990
(87) Internationale Veröffentlichungsnummer: WO 2011/100990

(56) Entgegenhaltungen:
- EP-A2- 0 896 263
- DE-C2- 19 751 525
- US-A1- 2004 254 655
- DATABASE INSPEC [Online] THE INSTITUTION OF ELECTRICAL ENGINEERS, STEVENAGE, GB; 2000, CHUNYU HE ET AL: "The advanced control and optimization in tobacco strips processing", XP002614543, Database accession no. 6762366 & WCICA 2000. PROCEEDINGS OF THE 3RD WORLD CONGRESS ON INTELLIGENT CONTROL AND AUTOMATION 28 JUNE-2 JULY 2000 HEFEI, CHINA, Bd. 5, 28. Juni 2000 (2000-06-28), Seiten 3549-3552 VOL., Proceedings of the 3rd World Congress on Intelligent Control and Automation (Cat. No.00EX393) IEEE Piscataway, NJ, USA DOI: DOI:10.1109/WCICA.2000.863203 ISBN: 0-7803-5995-X
- ALVAREZ-LOPEZ I ET AL: "Drying process of tobacco leaves by using a fuzzy controller", FUZZY SETS AND SYSTEMS, ELSEVIER SCIENCE PUBLISHERS, AMSTERDAM, NL, Bd. 150, Nr. 3, 16. März 2005 (2005-03-16) , Seiten 493-506, XP004706240, ISSN: 0165-0114, DOI: DOI:10.1016/J.FSS.2004.07.019

## Beschreibung

Die Erfindung betrifft eine Vorrichtung zur Tabakaufbereitung in der Tabak verarbeitenden Industrie, umfassend eine Steuerungseinrichtung, die zur Steuerung der Vorrichtung auf der Grundlage einer Mehrzahl in einem Speicher gespeicherter Steuerungsparameter eingerichtet ist. Die Erfindung betrifft weiterhin ein Verfahren zum Betrieb einer derartigen Vorrichtung.

Eine Anlage zur Tabakaufbereitung mit einer Löse-Konditioniervorrichtung ist beispielsweise aus der DE 197 51 525 C2 bekannt.

US 2004 0254655 A1 offenbart ein Verfahren zum dynamischen Einstellen eines Betriebsparameters eines Systems, beispielsweise eines Computersystems mit einer Mehrzahl von Knoten, wobei jeder Knoten einen Ausgabepuffer aufweist. Der einzustellende Betriebsparameters ist beispielsweise die Größe des Ausgabepuffers.

EP 0 896 263 A2 offenbart ein Verfahren zur Ermittlung optimaler Reglerparameter für eine Drehzahlregelung eines Elektromotors.

He Chunyu et al., "The advanced control and optimization in tobacco strips processing", Proceedings of the 3rd World Congress on Intelligent Control and Automation, 28.6.-2-7.2000, Hefei, China, Bd. 5, S. 3549, beschreibt Theorien der online adaptiven Optimierung und verallgemeinerter Vorhersagesteuerungs-Algorithmen in der Verarbeitung von Tabakstrips.

Bei der Inbetriebnahme einer Anlage zur Tabakaufbereitung müssen eine Vielzahl von Steuerungsparametern manuell eingegeben werden, die entweder auf Erfahrungswerten des Fachpersonals beruhen oder in aufwendigen Versuchen vor Ort ermittelt werden müssen. Die Inbetriebnahmezeiten werden dabei auf Grund der wachsenden Anzahl von Parametern und komplexer werdenden Systemen immer langwieriger. Bei geänderten Betriebsbedingungen entsprechen die eingestellten Parameter häufig nicht mehr dem optimalen Parametersatz, was dazu führen kann, dass die Anlage nicht optimal betrieben wird. Bei zu starken Abweichungen kann es erforderlich werden, die Parameter durch Fachpersonal nachstellen zu lassen, was zeitaufwendig und kostspielig ist und in der Regel Ausfallzeiten der Anlage mit sich bringt.

Die Aufgabe der Erfindung besteht darin, eine Vorrichtung zur Tabakaufbereitung und ein entsprechendes Verfahren bereitzustellen, bei der die Inbetriebnahmezeiten reduziert sind und einem nicht optimalen Betrieb und Ausfallzeiten aufgrund veränderter Betriebsbedingungen entgegengewirkt wird.

Die Erfindung löst diese Aufgabe mit den Mitteln der unabhängigen Ansprüche. Durch die automatische Durchführung mindestens eines Versuchs mit einer Mehrzahl von Versuchsdurchläufen der Vorrichtung unter Variation einer Mehrzahl von ausgewählten Steuerungsparametern, Ermittlung mindestens einer Zielgröße an dem Tabakprodukt, und Ermittlung mindestens eines geänderten Steuerungsparameters durch Auswertung der ermittelten Zielgröße kann jederzeit ein im Wesentlichen optimaler Parametersatz für Betrieb der Vorrichtung in einem optimalen Arbeitsbereich ermittelt werden, ohne dass eine aufwendige manuelle Ermittlung optimaler Parameter durch Fachpersonal erforderlich ist. Weiterhin kann sich die Vorrichtung automatisch geänderten Betriebsbedingungen anpassen, ohne dass es zu längeren Ausfallzeiten kommt.

Die Durchführung eines Versuchsdurchlaufs bedeutet dabei den Betrieb der Vorrichtung mit Produkt über einen vorgegebenen Zeitraum mit einem konstanten, definierten Parametersatz. Innerhalb eines Versuchs wird der Parametersatz von einem Versuchsdurchlauf zum nächsten nach einem vorbestimmten Versuchsplan geändert. Die erfindungsgemäße Versuchsdurchführung unterscheidet sich von einer Regelung dadurch, dass die zu optimierenden Parameter, d.h. die von Versuchsdurchlauf zu Versuchsdurchlauf variierten Parameter, während eines gesamten Versuchsdurchlaufs konstant gehalten werden. Mit der erfindungsgemäßen Versuchsdurchführung lassen sich insbesondere auch solche Parameter optimieren, für die eine zuverlässige, effiziente Regelung nicht möglich ist. Beispielsweise reagieren bei trägen Systemen die Regelungsgrößen häufig zu langsam, um eine zuverlässige Regelung zu ermöglichen. Weiterhin nimmt die Komplexität einer Regelung mit der Anzahl von Parametern, die in die Zielgröße eingehen, außerordentlich stark zu, so dass eine Regelung für ein System mit einer Vielzahl zu variierender Parameter in der Praxis häufig nicht möglich ist. Im Übrigen stellen die erfindungsgemäß zu variierenden Parameter Sollwerte für den regulären Produktionsbetrieb der Anlage dar, während in einer Regelung der Sollwert vorgegeben ist und der Istwert verändert wird, um eine Angleichung an den Sollwert zu erzielen.

Erfindungsgemäß wird in einem Versuch eine Mehrzahl von Steuerungsparametern gleichzeitig variiert. Hierdurch kann, im Vergleich zur Variation nur eines Parameters, mit einer reduzierten Anzahl von Versuchen, und damit erheblich schneller, ein verbesserter Parametersatz gefunden werden. Erfindungsgemäß wird der Versuch auf der Grundlage einer statistischen Versuchsplanung durchgeführt, um die Anzahl der erforderlichen Versuche auf ein Minimum zu reduzieren und die Ausfallzeiten daher so gering wie möglich zu halten.

Vorzugsweise wird eine Mehrzahl von Versuchen nacheinander durchgeführt, um eine iterative Optimierung der Steuerungsparameter zu erreichen. Hierzu wird zweckmäßigerweise die Parametervariation eines Versuchs in Abhängigkeit von der Auswertung der ermittelten Zielgröße des vorhergehenden Versuchs geändert. In einer Ausführungsform können die Versuche insbesondere endlos fortlaufend wiederholt durchgeführt werden. In einer anderen Ausführungsform kann die Durchführung von Versuchen abgebrochen werden, wenn eine vorbestimmte Zielvorgabe erreicht wird. Die Durchführung mindestens eines Versuchs kann dann automatisch wieder gestartet werden, wenn die Erfüllung einer vorbestimmten Randbedingung festgestellt wird. Alternativ ist ein manueller Start der Versuchsdurchführung möglich. Die Erfindung wird im Folgenden anhand vorteilhafter Ausführungsformen unter Bezugnahme auf die beigefügten Figuren erläutert. Dabei zeigt:
- Fig. 1: eine schematische Darstellung einer Konditioniervorrichtung für die Tabakaufbereitung;
- Fig. 2: ein Flussdiagramm für ein Verfahren zur Optimierung einer Vorrichtung für die Tabakaufbereitung; und
- Fig. 3: einen tabellarischen Versuchsplan zur Verwendung in dem Verfahren gemäß Figur 2.

Eine Anlage für die Konditionierung eines Tabakprodukts umfasst eine Konditioniervorrichtung 10, hier eine rotierende Löse-Konditioniertrommel 11, in die das beispielsweise von einem nicht gezeigten Slicer kommende Tabakprodukt 12 eingefördert wird. In der Löse-Konditioniertrommel 11 sind nicht gezeigte Einrichtungen vorgesehen, die bei Rotation der Trommel 11 eine Vereinzelung der verpressten Tabakblätter bewirken.

Das Löseverhalten wird durch eine Erhöhung der Tabaktemperatur günstig beeinflusst. Die Wärmeeinbringung in die Trommel 11 erfolgt durch mit Dampf gesättigte Prozessluft, die in einem Umluftkanal 13 und eine am Tabakeinlauf angeordnete Zuführdüse 17 durch die Trommel 11 geleitet wird. Der Dampf wird von einer Dampfzuführleitung 14 mittels einer Düse 15 in den Umluftkanal 13 eingebracht. Die Prozesslufttemperatur kann mittels eines Regelkreises 24 auf der Grundlage eines mittels eines Signals von einem Temperaturfühler 25 gesteuerten Ventils 26 in der Dampfzuführleitung 14 geregelt sein. Des Weiteren kann ein Dampfwärmetauscher 16 zum Vorheizen der Trommel 11 vorgesehen sein.

Mittels einer ebenfalls am Tabakeinlauf angeordneten Zweistoffdüse 18, die mit der Dampfzuführleitung 14 und einer Wasserzuführleitung 19 verbunden ist und einen Sprühkegel aus vernebeltem Wasser erzeugt, werden die Tabakblätter befeuchtet bzw. konditioniert. Mittels eines an der Auslaufseite der Trommel 11 angeordneten Feuchtesensors 20 kann die Feuchte des aus der Trommel 11 auslaufenden Tabakprodukts 21 bestimmt werden. Die Wasserzuführung durch die Düse 18 kann mittels eines Regelkreises auf der Grundlage eines Signals von dem Feuchtesensor 20 geregelt sein. Die Trommel 11 kann zusätzlich eine Einrichtung zum Soßieren des Tabakprodukts, insbesondere eine Düse für den Eintrag von Soße und Dampf, aufweisen.

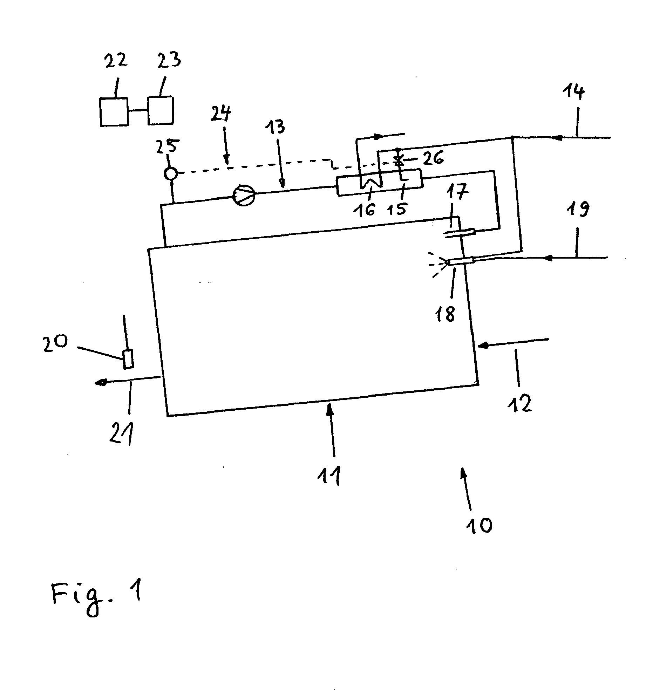

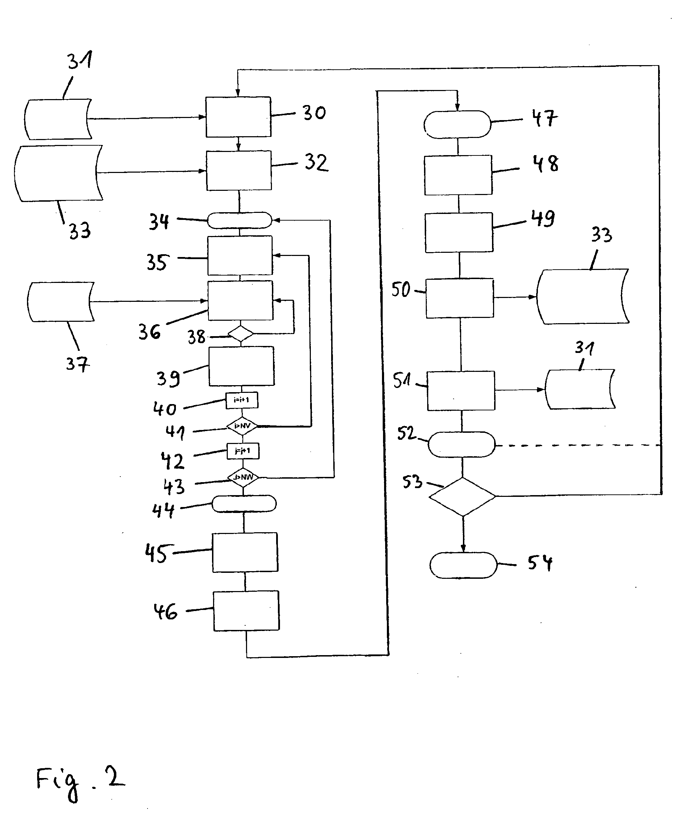

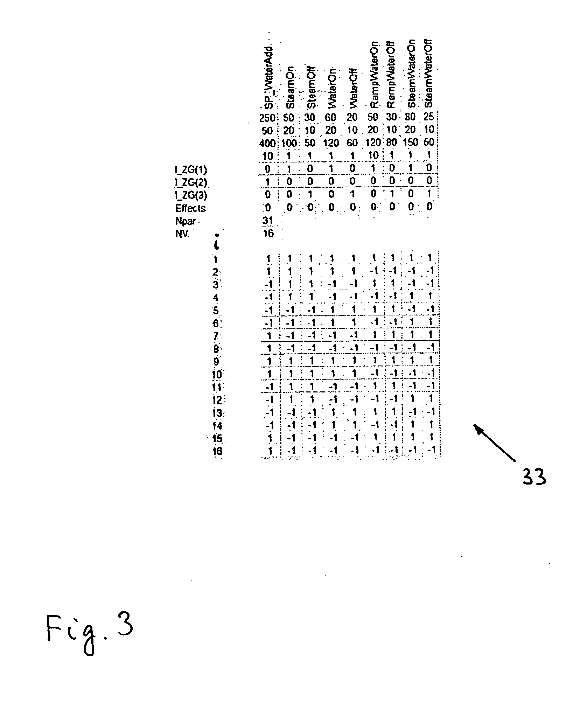

Im Folgenden wird anhand der Figuren 2 und 3 ein Verfahren zur Selbstoptimierung einer Anlage für die Tabakaufbereitung, beispielsweise der in Fig. 1 gezeigten Löse-Konditioniervorrichtung, erläutert. Dabei wird das in Fig. 2 gezeigte Verfahren automatisch und wiederholt in einer programmierten bzw. programmierbaren elektronischen Steuerungseinrichtung 22 durchgeführt, die beispielsweise in der Anlagensteuerung gebildet sein kann.

Zunächst werden in dem Schritt 30 aus einer in einem elektronischen Speicher 23 abgelegten Parameterliste 31 die aktuellen Werte für die zu variierenden Parameter einschließlich der Grenzen und der Schrittweiten eingelesen. Danach wird in dem Schritt 32 der in dem Speicher 23 abgelegte Versuchsplan 33 eingelesen.

Ein Beispiel für einen Versuchsplan 33 für die Löse-Konditioniervorrichtung ist in Figur 3 gezeigt. Der Versuchsplan 33 hat beispielsweise die Form einer Matrix, wobei die Spalten beispielsweise die zu variierenden Parameter wiedergeben. Im vorliegenden Beispiel werden im Rahmen der Versuchsdurchführung 9 Parameter SP_WaterAdd, SteamOn, ..., SteamWaterOff variiert. Dabei ist SP_WaterAdd der Sollwert für die über die Düse 18 in die Trommel 11 zugegebene Wassermenge, die üblicherweise in 1/h oder 1/(100 kg Tabak) angegeben wird. SteamOn, ..., SteamWaterOff sind in Sekunden angegebene Zeiten, die den mit Dampf gesättigten Prozessluftstrom durch den Umluftkanal und die Zugabe von Dampf und Wasser in die Trommel 11 durch die Düse 18 in einzelnen Betriebsphasen wie Bereitschaft, Produktion und Auslaufen betreffen. Unter dem Parameternamen sind die in dem Schritt 30 eingelesenen Parameterwerte, Schrittweiten, untere Grenzen und obere Grenzen für die einzelnen zu variierenden Parameter angegeben, als beispielsweise für den Parameter SP_WaterAdd 250 1/h, 50 1/h, 400 1/h und 10 1/h.

Im Schritt 34 wird sodann die Durchführung eines Versuchs gestartet. Dabei werden in dem Schritt 35 ausgehend von den aktuellen Parameterwerten anhand des Versuchsplans 33 die Werte der zu variierenden Parameter verändert. Für einen ersten Versuchsdurchlauf (Zeile i=1 im Versuchsplan 33) werden beispielsweise sämtliche zu variierenden Parameter um jeweils eine Schrittweite erhöht, beispielsweise der Parameter SP_Water-Add auf 300 1/h, etc. Sodann wird in einem ersten Versuchsdurchlauf 36 (i=1) unter Verwendung eines Rezepts 37, d.h. zusätzlicher kundenspezifischer Parameter wie beispielsweise Tabakmassenstrom und Wassermenge, die Löse-Konditioniervorrichtung 10 unter Zugabe von Tabakprodukt 12 betrieben, wobei in einem Versuchsdurchlauf sämtliche Anlagenparameter als Sollwerte konstant gehalten werden. Nachdem die Anlaufphase abgeschlossen ist und sich in der Löse-Konditioniervorrichtung 10 ein stabiles Produktionsgleichgewicht eingestellt hat, wird an dem Ausgangsprodukt 21 mindestens eine Messgröße gemessen, beispielsweise ein Feuchtesignal mit dem Feuchtesensor 20, und die gemessenen Ausgangsdaten werden, gegebenenfalls nach einer Validitätsprüfung (Schritt 38), in einem Schritt 39 in dem Speicher 23 gespeichert.

Anschließend wird der Zähler i um 1 erhöht (Schritt 40) und, da in Schritt 41 festgestellt wird, dass die Gesamtzahl der durchzuführenden Versuchsdurchläufe NV, hier beispielsweise 16, noch nicht erreicht ist, der zweite Versuchsdurchlauf mit i=2 vorbereitet. Dazu wird, wie aus dem Versuchsplan 33 zu entnehmen ist, der Wert der ersten fünf Parameter um eine Schrittweite erhöht und die letzten vier Parameter um eine Schrittweite verringert. Sodann wird mit diesen Parametern der zweite Versuchsdurchlauf 37 durchgeführt und die an dem Ausgangsprodukt 21 gemessenen Ausgangsdaten ebenfalls in dem Speicher 23 gespeichert.

Wie aus Figur 3 ersichtlich ist, wird vor jedem Versuchsdurchlauf eine Mehrzahl von Parametern geändert. Im vorliegenden Bespiel werden vor jedem Versuchsdurchlauf sämtliche zu variierenden Parameter geändert. Dies ist jedoch nicht zwingend der Fall; in einem anderen Fall können einzelne Parameter auch von einem Versuchsdurchlauf zum nächsten unverändert bleiben. Der Versuchsplan 33 wird mittels statistischer Versuchsplanung ermittelt.

Wenn auf diese Weise sämtliche NV Versuchsdurchläufe durchgeführt sind, kann ein weiterer Zähler j inkrementiert (Schritt 42) und gegebenenfalls in Schritt 43 die Durchführung von Versuchswiederholungen NW veranlasst werden. Schließlich wird in Schritt 44 die Versuchsdurchführung beendet.

Anschließend beginnt die Auswertephase, in der zunächst in Schritt 45 die gemessenen Ausgangsdaten sämtlicher Versuchsdurchläufe aus dem Speicher 23 in eine Auswerteeinrichtung, die beispielsweise in der Steuerungseinrichtung 22 realisiert sein kann, geladen werden und aus den Ausgangsdaten in dem Schritt 46 mindestens eine Zielgröße, in diesem Fall auf Basis der Ausgangsfeuchte des Tabakprodukts 21, für sämtliche Versuchsdurchläufe berechnet wird. Sodann beginnt in Schritt 47 die eigentliche Auswertung. Zunächst werden in Schritt 48 die Zielgrößen auf ihre Signifikanz ausgewertet. Anschließend wird in Schritt 49 der optimale Parametersatz errechnet. Dies ist beispielsweise der Parametersatz aus demjenigen Versuchsdurchlauf, für den die errechnete Zielgröße am nächsten an dem optimalen Wert (beispielsweise eine bestimmte Ausgangsfeuchte des Tabakprodukts 21) liegt. Des Weiteren wird in dem Schritt 49 eine neue Schrittweite für die folgende Parametervariation berechnet. Schließlich wird in dem Schritt 50 gegebenenfalls der Versuchsplan 33 angepasst, insbesondere im Hinblick auf die geänderten Parameter und/oder Schrittweiten, und für den nächsten Versuch in dem Speicher 23 gespeichert. Desgleichen wird in dem Schritt 51 die geänderte Parameterliste 31 in der Anlagensteuerung für den nächsten Versuch in dem Speicher 23 gespeichert. In Schritt 52 wird dann die Auswertung beendet.

In einer bevorzugten Ausführungsform wird nach Abschluss der Auswertung in Schritt 53 geprüft, ob eine vorbestimmte Zielvorgabe erreicht wird, z.B. dass die Ausgangsfeuchte in einem vorbestimmten optimalen Bereich liegt. Wenn die Zielvorgabe erreicht wird, wird der Versuchsmodus beendet und die Anlage kehrt in den normalen Produktionsmodus zurück. Bei veränderten Randbedingungen kann die Selbstoptimierung manuell oder alternativ beim Erfüllen vorbestimmter Kriterien automatisch wieder gestartet werden. Wenn die Zielvorgabe in dem Schritt 53 noch nicht erreicht ist, wird die Versuchsdurchführung beginnend mit dem Schritt 30 neu gestartet, so dass durch iterative Wiederholung der Versuchsdurchführung eine Selbstoptimierung der variierten Steuerungsparameter erreicht wird.

In einer anderen Ausführungsform kann die Selbstoptimierung fortlaufend ohne Abbruchkriterium arbeiten. Dies ist in Fig. 2 durch eine gestrichelte Linie ausgehend von dem Ende der Auswertung 52 angedeutet.

Das in den Figuren gezeigte Ausführungsbeispiel betrifft eine Löse-Konditioniervorrichtung 10. Die Erfindung ist aber ebenso auf andere Vorrichtungen für die Tabakaufbereitung, beispielsweise Trockner, anwendbar.

## Patentansprüche

1. Vorrichtung (10) zur Tabakaufbereitung in der Tabak verarbeitenden Industrie, umfassend eine Steuerungseinrichtung (22), die zur Steuerung der Vorrichtung (10) auf der Grundlage einer Mehrzahl in einem Speicher (23) gespeicherter Steuerungsparameter eingerichtet ist, **dadurch gekennzeichnet, dass** die Steuerungseinrichtung (22) zur automatischen Durchführung mindestens eines Versuchs auf der Grundlage einer statistischen Versuchsplanung mit einer Mehrzahl von Versuchsdurchläufen der Vorrichtung (10) unter gleichzeitiger Variation einer Mehrzahl von ausgewählten Steuerungsparametern, zur Ermittlung mindestens einer Zielgröße an dem Tabakprodukt, und zur Ermittlung mindestens eines geänderten Steuerungsparameters durch Auswertung der ermittelten Zielgröße eingerichtet ist.

2. Vorrichtung nach Anspruch 1, wobei zur Optimierung der Steuerungsparameter eine Mehrzahl von Versuchen durchgeführt wird.

3. Vorrichtung nach Anspruch 2, wobei die Parametervariation eines Versuchs in Abhängigkeit von der Auswertung der ermittelten Zielgröße eines vorhergehenden Versuchs geändert wird.

4. Vorrichtung nach Anspruch 2 oder 3, wobei Versuche fortlaufend wiederholt durchgeführt werden.

5. Vorrichtung nach einem der Ansprüche 2 bis 4, wobei die Durchführung von Versuchen abgebrochen wird, wenn eine vorbestimmte Zielvorgabe erreicht wird.

6. Vorrichtung nach einem der vorangehenden Ansprüche, wobei die Durchführung mindestens eines Versuchs automatisch gestartet wird, wenn eine vorbestimmte Randbedingung erfüllt ist.

7. Vorrichtung nach einem der vorangehenden Ansprüche, wobei die Durchführung mindestens eines Versuchs manuell gestartet werden kann.

8. Vorrichtung nach einem der vorangehenden Ansprüche, umfassend mindestens einen Sensor (20) zur Erfassung der Zielgröße des Tabakprodukts (21).

9. Verfahren zum Betrieb einer Vorrichtung zur Tabakaufbereitung in der Tabak verarbeitenden Industrie, umfassend die Steuerung der Vorrichtung auf der Grundlage einer Mehrzahl gespeicherter Steuerungsparameter, automatische Durchführung mindestens eines Versuchs auf der Grundlage einer statistischen Versuchsplanung mit einer Mehrzahl von Versuchsdurchläufen der Vorrichtung unter gleichzeitiger Variation einer Mehrzahl von ausgewählten Steuerungsparametern, Ermittlung mindestens einer Zielgröße an dem Tabakprodukt, und Ermittlung mindestens eines geänderten Steuerungsparameters durch Auswertung der ermittelten Zielgröße.

## Claims

1. Apparatus (10) for preparing tobacco in the tobacco processing industry, including a control device (22) which is adapted to control the apparatus (10) on the basis of a plurality of control parameters stored in a storage device (23), **characterized in that** the control device (22) is adapted to automatically perform at least one test on the basis of a statistical test planning including a plurality of test runs of the apparatus (10) varying a plurality of chosen control parameters at the same time, to determine at least one target parameter on the tobacco product, and to determine at least one changed control parameter by evaluating the determined target parameter.

2. Apparatus according to claim 1, wherein a plurality of tests is performed for optimizing the control parameters.

3. Apparatus according to claim 2, wherein the parameter variation of one test is changed depending on the evaluation of the determined target parameter of a preceding test.

4. Apparatus according to claim 2 or 3, wherein tests are performed in a continuously repeated manner.

5. Apparatus according to one of the claims 2 to 4, wherein the testing is discontinued as soon as a predetermined set target is reached.

6. Apparatus according to any one of the preceding claims, wherein at least one test is started automatically in case a predetermined condition is determined.

7. Apparatus according to any one of the preceding claims, wherein at least one test can be started manually.

8. Apparatus according to any one of the preceding claims, including at least one sensor (20) for detecting the target parameter of the tobacco product (21).

9. Method for operating an apparatus for preparing tobacco in the tobacco processing industry, including controlling the apparatus on the basis of a plurality of stored control parameters, automatically performing at least one test on the basis of a statistical test planning including a plurality of test runs of the apparatus varying a plurality of chosen control parameters at the same time, determining at least one target parameter on the tobacco product, and determining at least one changed control parameter by evaluating the determined target parameter.

## Revendications

1. Dispositif (10) de préparation du tabac dans l'industrie de transformation du tabac, comprenant un dispositif de commande (22), qui est conçu pour commander le dispositif (10) sur la base d'une pluralité de paramètres de commande stockés dans une mémoire (23), **caractérisé par le fait que** le dispositif de commande (22) est conçu pour exécuter automatiquement au moins un essai sur la base d'un plan d'essais statique avec une pluralité de passes d'essai du dispositif (10) en faisant simultanément varier une pluralité de paramètres de commande sélectionnés, pour déterminer au moins une grandeur ciblée sur le produit de tabac, et pour déterminer au moins un paramètre de commande modifié par une analyse de la grandeur ciblée déterminée.

2. Dispositif selon la revendication 1, dans lequel une pluralité d'essais est exécutée pour optimiser les paramètres de commande.

3. Dispositif selon la revendication 2, dans lequel la variation de paramètres d'un essai est modifiée en fonction de l'analyse de la grandeur ciblée déterminée d'un essai précédent.

4. Dispositif selon la revendication 2 ou 3, dans lequel des essais sont exécutés de manière répétée en continu.

5. Dispositif selon l'une des revendications 2 à 4, dans lequel l'exécution d'essais est interrompue lorsqu'un objectif prédéterminé est atteint.

6. Dispositif selon l'une quelconque des revendications précédentes, dans lequel l'exécution d'au moins un essai est démarrée automatiquement lorsqu'une condition marginale prédéterminée est remplie.

7. Dispositif selon l'une quelconque des revendications précédentes, dans lequel l'exécution d'au moins un essai peut être démarrée manuellement.

8. Dispositif selon l'une quelconque des revendications précédentes, comprenant au moins un capteur (20) pour détecter la grandeur ciblée du produit de tabac (21).

9. Procédé de fonctionnement d'un dispositif de préparation du tabac dans l'industrie de transformation du tabac, comprenant la commande du dispositif sur la base d'une pluralité de paramètres de commande mémorisés, l'exécution automatique d'au moins un essai sur la base d'un plan d'essais statique avec une pluralité de passes d'essai du dispositif en faisant simultanément varier une pluralité de paramètres de commande sélectionnés, la détermination d'au moins une grandeur ciblée sur le produit de tabac, et la détermination d'au moins un paramètre de commande modifié par une analyse de la grandeur ciblée déterminée.
